# EUROPÄISCHE PATENTSCHRIFT

(11) **EP 1 581 725 B1**
(45) Veröffentlichungstag und Bekanntmachung des Hinweises auf die Patenterteilung: **13.08.2008**
(21) Anmeldenummer: 03740105.6
(22) Anmeldetag: 24.06.2003
(51) Int. Cl.: F01L 1/34, F02D 13/02, F02D 41/06, F02N 17/00

(54) **VERFAHREN ZUM BETREIBEN EINER BRENNKRAFTMASCHINE**
METHOD FOR OPERATION OF AN INTERNAL COMBUSTION ENGINE
PROCEDE D'UTILISATION D'UN MOTEUR A COMBUSTION INTERNE

(30) Priorität: 23.12.2002 DE 10260748
(43) Veröffentlichungstag der Anmeldung: 05.10.2005
(73) Patentinhaber: ROBERT BOSCH GMBH, 70442 Stuttgart (DE)
(72) Erfinder: CASAL KULZER, André-Francisco, 71032 Boeblingen (DE); LAUBENDER, Jochen, 70439 Stuttgart (DE); SIEBER, Udo, 74321 Bietigheim (DE)
(86) Internationale Anmeldenummer: PCT/DE2003/002090
(87) Internationale Veröffentlichungsnummer: WO 2004/061274

(56) Entgegenhaltungen:
- EP-A- 1 217 176
- DE-A- 10 020 104
- DE-A- 10 020 325
- DE-A- 10 111 928
- DE-A- 19 903 594
- DE-A- 19 955 857
- GB-A- 2 367 859
- US-B1- 6 397 803

## Beschreibung

### Stand der Technik

Die vorliegende Erfindung betrifft ein Verfahren zum Betreiben einer Brennkraftmaschine mit mindestens einem steuerbaren Einlassventil und mindestens einem steuerbaren Auslassventil, bei dem die Brennkraftmaschine in einer Startbetriebsart direkt gestartet wird und nach dem Start in mindestens einer weiteren Betriebsart betrieben wird.

Die vorliegende Erfindung betrifft ferner eine Brennkraftmaschine mit mindestens einem steuerbaren Einlassventil und mindestens einem steuerbaren Auslassventil, die in einer Startbetriebsart direkt gestartet wird und nach dem Start in mindestens einer weiteren Betriebsart betrieben wird.

Darüber hinaus betrifft die vorliegende Erfindung ein Steuergerät für eine gattungsgemäße Brennkraftmaschine sowie ein Computerprogramm für das Steuergerät.

Das Prinzip des Direktstarts bei Brennkraftmaschinen, d.h. das Starten der Brennkraftmaschine ohne elektrischen Starter oder dergleichen, ist bereits aus dem Stand der Technik bekannt.

Um einen sicheren Direktstart einer Brennkraftmaschine aus dem Stillstand zu ermöglichen, ist es erforderlich, Kraftstoff in einen Brennraum eines Zylinders der Brennkraftmaschine einzuspritzen, der sich gerade in einem Arbeitstakt befindet. Bei der anschließenden Zündung des eingespritzten Kraftstoffs steigt der Druck in dem Zylinder an und treibt einen Kolben des Zylinders an, der über eine Kurbelwelle Arbeit abgibt.

Aus der DE 101 11 928 A1 ist ein Verfahren zum anlasserfreien Starten einer mehrzylindrigen direkteinspritzenden Brennkraftmaschine bekannt, bei dem unmittelbar nach dem Zünden eines Luft-/Kraftstoffgemischs eines in der Arbeitsphase befindlichen ersten Zylinders Kraftstoff auch in einen Brennraum eines weiteren Zylinders eingespritzt wird, dessen Kolben sich in einer Ansaugphase befindet, und bei dem der eingespritzte Kraftstoff noch in der Ansaugphase gezündet wird.

Aufgabe der vorliegenden Erfindung ist es, ein gattungsgemäßes Betriebsverfahren sowie eine Brennkraftmaschine und ein Steuergerät hierfür derart weiterzuentwickeln, dass ein einfacher und sicherer Direktstart der Brennkraftmaschine gewährleistet ist.

Diese Aufgabe wird bei einem Betriebsverfahren der eingangs genannten Art erfindungsgemäß dadurch gelöst, dass ein während der Startbetriebsart verwendeter Startauslasszeitpunkt des Auslassventils zum Ausstoßen von Abgasen der Brennkraftmaschine innerhalb eines Ausstoßtaktes zeitlich gegenüber einem während der weiteren Betriebsart(en) verwendeten Standardauslasszeitpunkt verzögert wird und/oder dass eine Auslassphase, während der das Auslassventil geöffnet ist, gegenüber einer während der weiteren Betriebsart(en) verwendeten Auslassphase verkürzt wird.

Durch die erfindungsgemäße Verzögerung des Startauslasszeitpunkts gegenüber dem Standardauslasszeitpunkt ergibt sich eine bessere Umsetzung der während der ersten Verbrennung beim Direktstart der Brennkraftmaschine freigesetzten Brennenergie in mechanische Arbeit, die zum Starten der Brennkraftmaschine nutzbar ist. Auf diese Weise ist gewährleistet, dass ein größtmöglicher Anteil der Brennenergie zum Start der Brennkraftmaschine verwendet wird.

Alternativ oder zusätzlich zu der erfindungsgemäßen Verzögerung des Startauslasszeitpunkts innerhalb eines Ausstoßtaktes kann erfindungsgemäß vorteilhaft auch die Auslassphase verkürzt werden, wodurch ebenfalls eine bessere Umsetzung der während der Verbrennung bei dem Direktstart der Brennkraftmaschine freigesetzten Brennenergie in mechanische Arbeit erzielbar ist.

Ein weiterer den Direktstart begünstigender Faktor ist die Verminderung eines Kompressionsdrucks in einem Brennraum des jeweiligen Zylinders der Brennkraftmaschine, die sich durch den geringeren Luftaufwand aufgrund einer Verzögerung des Schließzeitpunkts des Einlassventils in der Startbetriebsart bei einer erfindungsgemäßen Verfahrensvariante ergibt.

Die erfindungsgemäße Verzögerung des Startauslasszeitpunkts bzw. Verkürzung der Auslassphase kann zusammen mit der Verzögerung des Schließzeitpunkts in der Startbetriebsart eingesetzt werden. Es ist auch möglich, entweder nur die Verzögerung des Startauslasszeitpunkts oder die Verzögerung des Schließzeitpunkts in der Startbetriebsart einzusetzen.

Bei Ventiltriebsystemen mit Nockenwelle(n) wird erfindungsgemäß vorgeschlagen, dass die Verzögerung durch Verstellen einer das Auslassventil steuernden Auslassnockenwelle und/oder einer das Einlassventil steuernden Einlassnockenwelle erfolgt. Insbesondere werden gemäß einer weiteren Ausführungsform des erfindungsgemäßen Betriebsverfahrens Phasensteller zur Verstellung der Nockenwelle(n) eingesetzt. Dabei ist es auch denkbar, mit einem Phasensteller gleichzeitig eine Einlassnockenwelle und eine Auslassnockenwelle zu steuern.

Eine andere Ausführungsform der Erfindung sieht vor, dass alternativ zu dem Phasensteller oder parallel dazu ein die Öffnungszeit des Einlassventils / Auslassventils beeinflussendes Ventiltriebsystem zur Verstellung der Einlassnockenwelle und/oder der Auslassnockenwelle verwendet wird.

Eine weitere, sehr vorteilhafte Ausführungsform der Erfindung sieht vor, dass die Einlassnockenwelle und/oder die Auslassnockenwelle bereits bei einer Deaktivierung der Brennkraftmaschine für einen nächsten Start in der Startbetriebsart verstellt werden. Damit entfällt die Notwendigkeit, die Nockenwelle(n) unmittelbar vor dem nächsten Start zu verstellen.

Gemäß einer weiteren Ausführungsform des erfindungsgemäßen Verfahrens wird das Einlassventil und/oder das Auslassventil durch ein nockenwellenfreies Ventiltriebsystem, d. h. beispielsweise elektromagnetisch oder hydraulisch, gesteuert. Die erfindungsgemäße Verzögerung des Startauslasszeitpunkts und des Schließzeitpunkts ist hiermit ebenfalls möglich und kann i.a. sogar mit geringerem mechanischem Aufwand realisiert werden.

Eine andere, sehr vorteilhafte Ausführungsform des erfindungsgemäßen Verfahrens sieht vor, dass ein Ventilhub des Einlassventils oder des Auslassventils variiert wird, wodurch die Direktstarteigenschaften der Brennkraftmaschine weiter verbessert werden können.

Sehr vorteilhaft ist auch eine weitere Ausführungsform der Erfindung, bei der die Verzögerung mit steigender Drehzahl der Brennkraftmaschine schrittweise verringert wird. Es ist auch möglich, die Verzögerung bei Überschreiten einer vorgebbaren Mindestdrehzahl der Brennkraftmaschine zu deaktivieren, d.h. ohne eine schrittweise Verringerung.

Als eine weitere Lösung der Aufgabe der vorliegenden Erfindung ist eine Brennkraftmaschine gemäß Patentanspruch 12 sowie ein Steuergerät für eine Brennkraftmaschine gemäß Patentanspruch 13 angegeben.

Als noch eine weitere Lösung der Aufgabe der vorliegenden Erfindung ist ein Computerprogramm für ein gattungsgemäßes Steuergerät angegeben.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Fig. 1-8: zeigen jeweils ein Ventil-Steuerdiagramm gemäß einer Ausführungsform der Erfindung,
- Figur 9: zeigt ein Zustandsdiagramm einer Ausführungsform des erfindungsgemäßen Verfahrens, und
- Figur 10: zeigt schematisch eine erfindungsgemäße Brennkraftmaschine.

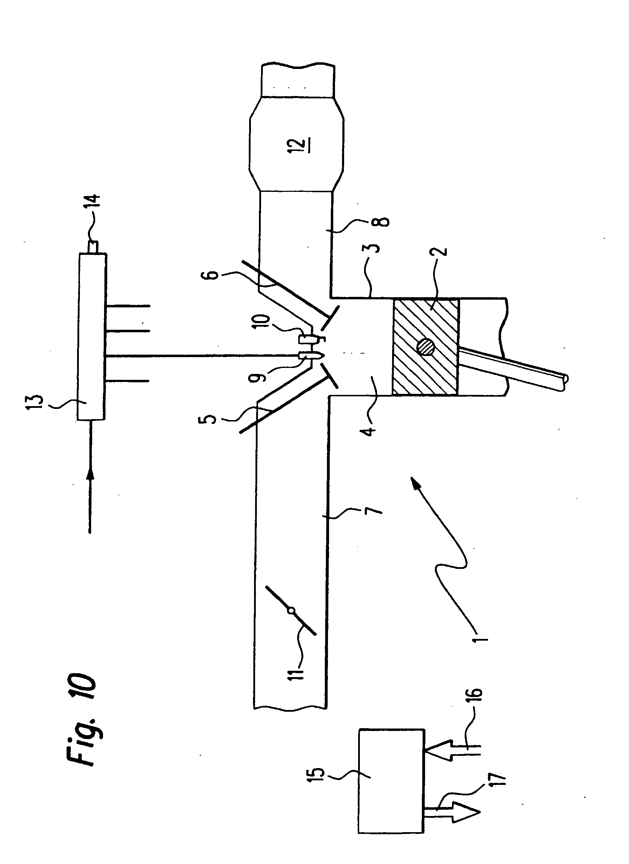

In der Figur 10 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein steuerbares Einlassventil 5 und ein steuerbares Auslassventil 6 begrenzt ist. Die Steuerung des Einlassventils 5 und des Auslassventils 6 erfolgt über elektromagnetische Stellglieder, die nicht in Figur 10 dargestellt sind und ermöglicht eine flexible Verstellung von Ein- bzw. Auslasszeitpunkten. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Das Einspritzventil 9 ist über eine Druckleitung mit einem Kraftstoffspeicher 13 verbunden. In entsprechender Weise sind auch die Einspritzventile der anderen Zylinder der Brennkraftmaschine 1 mit dem Kraftstoffspeicher 13 verbunden. Der Kraftstoffspeicher 13 wird über eine Zuführleitung mit Kraftstoff versorgt. Hierzu ist eine Kraftstoffpumpe vorgesehen, die dazu geeignet ist, den erwünschten Druck in dem Kraftstoffspeicher 13 aufzubauen.

Weiterhin ist an dem Kraftstoffspeicher 13 ein Drucksensor 14 angeordnet, mit dem der Druck in dem Kraftstoffspeicher 13 messbar ist. Bei diesem Druck handelt es sich um denjenigen Druck, der auf den Kraftstoff ausgeübt wird, und mit dem deshalb der Kraftstoff über das Einspritzventil 9 in den Brennraum 3 der Brennkraftmaschine 1 eingespritzt wird.

Im Betrieb der Brennkraftmaschine 1 wird Kraftstoff in den Kraftstoffspeicher 13 gefördert. Dieser Kraftstoff wird über die Einspritzventile 9 der einzelnen Zylinder 3 in die zugehörigen Brennräume 4 eingespritzt. Die eingespritzte Kraftstoffmenge hängt dabei im wesentlichen von der Einspritzzeit und von dem Kraftstoffdruck im Kraftstoffspeicher 13 ab.

Mit Hilfe der Zündkerzen 10 werden Verbrennungen in den Brennräumen 3 erzeugt, durch die die Kolben 2 in eine Hin-und Herbewegung versetzt werden. Diese Bewegungen werden auf eine nicht-dargestellte Kurbelwelle übertragen und üben auf diese ein Drehmoment aus.

Ein Steuergerät 15 ist von Eingangssignalen 16 beaufschlagt, die mittels Sensoren gemessene Betriebsgrößen der Brennkraftmaschine 1 darstellen. Beispielsweise ist das Steuergerät 15 mit dem Drucksensor 14, einem Luftmassensensor, einem Drehzahlsensor und dergleichen verbunden. Des Weiteren ist das Steuergerät 15 mit einem Fahrpedalsensor verbunden, der ein Signal erzeugt, das die Stellung eines von einem Fahrer betätigbaren Fahrpedals und damit das angeforderte Drehmoment angibt. Das Steuergerät 15 erzeugt Ausgangssignale 17, mit denen über Aktoren bzw. Steller das Verhalten der Brennkraftmaschine 1 beeinflusst werden kann. Beispielsweise ist das Steuergerät 15 mit dem Einspritzventil 9, der Zündkerze 10 und dergleichen verbunden und erzeugt die zu deren Ansteuerung erforderlichen Signale.

Unter anderem ist das Steuergerät 15 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 15 insbesondere im Hinblick auf einen geringen Kraftstoffverbrauch und/oder eine geringe Schadstoffentwicklung gesteuert und/oder geregelt. Zu diesem Zweck ist das Steuergerät 15 mit einem Mikroprozessor versehen, der in einem Speichermedium, insbesondere in einem Flash-Memory ein Computerprogramm abgespeichert hat, das dazu geeignet ist, die genannte Steuerung und/oder Regelung durchzuführen.

Das Steuergerät 15 steuert auch das Einlassventil 5 und das Auslassventil 6 bzw. deren elektromagnetische Stellglieder, um Frischgas in einem Ansaugzyklus des Zylinders 3 in den Brennraum 4 zu saugen bzw. um Abgas in einem Ausstoßtakt aus dem Brennraum 4 in das Abgasrohr 8 auszustoßen. Bei der vorliegenden Erfindung ist eine besondere Ansteuerung des Einlassventils 5 und des Auslassventils 6 vorgesehen, um die Brennkraftmaschine 1 (Fig. 10) direkt, d.h. ohne Antrieb durch einen elektrischen Starter oder dergleichen, zu starten.

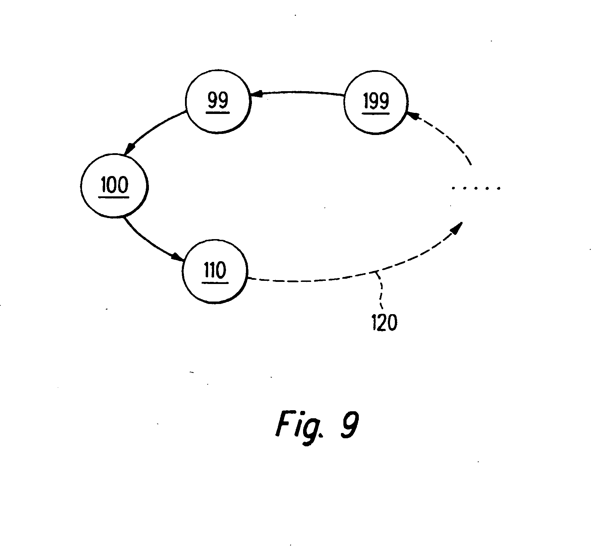

Hierzu wird die Brennkraftmaschine 1, wie aus dem Zustandsdiagramm in Figur 9 ersichtlich, zum Start aus dem Stillstand 99 zunächst in eine Startbetriebsart 100 versetzt, aus der sie nach einer gewissen Zeit in die Leerlaufbetriebsart 110 übergeht. Der gestrichelt gezeichnete Pfeil 120 aus Figur 9 deutet zusammen mit den vier Punkten in der rechten Hälfte des Zustandsdiagramms an, dass die Brennkraftmaschine 1 (Fig. 10) nach Erreichen der Leerlaufbetriebsart 110 noch weitere Betriebsarten annehmen kann, bevor sie ggf. im Schritt 199 deaktiviert wird.

Der zeitliche Verlauf einer Ansteuerung des Einlassventils 5 und des Auslassventils 6 kann zur Veranschaulichung über dem Kurbelwinkel, angegeben in °KW, aufgetragen werden. Eine solche Darstellung wird auch als Ventil-Steuerdiagramm oder als Ventilhubkurve bezeichnet.

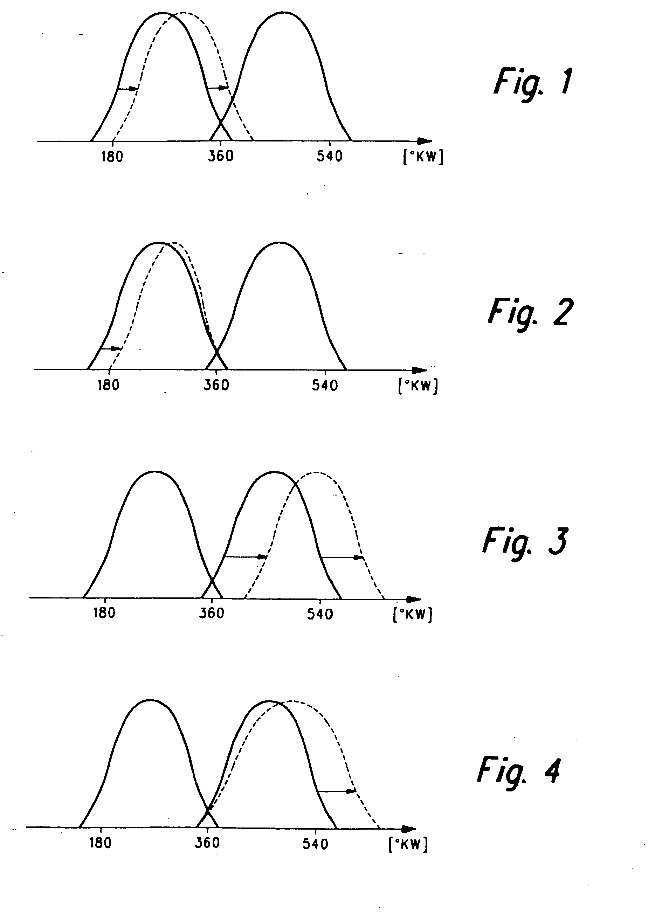

Figur 1 zeigt ein derartiges Ventil-Steuerdiagramm für eine erste Ausführungsform der vorliegenden Erfindung, bei dem der linke Teil der durchgezogenen Kurve, der sich zwischen etwa 170°KW und 370°KW erstreckt, dem Auslassventil 6 zugeordnet ist, während der rechte Teil der durchgezogenen Kurve, der sich zwischen etwa 350°KW und 560°KW erstreckt, dem Einlassventil 5 zugeordnet ist. Auch in den weiteren Ventil-Steuerdiagrammen der Figuren 2 bis 8 ist stets der linke Teil der Kurve des jeweiligen Ventil-Steuerdiagramms dem Auslassventil 6 und der rechte Teil der Kurve dem Einlassventil 5 zugeordnet. Dies entspricht einem Teil eines regulären Arbeitszyklus der Brennkraftmaschine 1 (Fig. 10), in dem nach einer Verbrennung (nicht gezeigt) eines Luft-Kraftstoff-Gemisches im Brennraum 4 des Zylinders 3 (Fig. 10) das Abgas durch das Auslassventil 6 ausgestoßen und anschließend Frischgas durch das Einlassventil 5 hindurch angesaugt wird.

Die durchgezogene Kurve in Figur 1 stellt eine herkömmliche Ansteuerung des Auslassventils 6 und des Einlassventils 5 dar, wie sie beispielsweise in der Leerlaufbetriebsart 110 (Fig. 9) erfolgt.

Im Unterschied zu der herkömmlichen Ansteuerung sieht die vorliegende Erfindung in der ersten Ausführungsform gemäß Figur 1 vor, den Auslasszeitpunkt zu verzögern. Dies ist durch die in Figur 1 gestrichelt gezeichnete Kurve symbolisiert, die eine erfindungsgemäße Ansteuerung des Auslassventils 6 darstellt und um etwa 20°KW bis 30°KW gegenüber der herkömmlichen Ansteuerung verschoben, d.h. verzögert ist. Die erfindungsgemäße Verzögerung ist zusätzlich durch die beiden in Figur 1 abgebildeten Pfeile verdeutlicht.

Bei den oben angegebenen Werten des Kurbelwellenwinkels für die erfindungsgemäße Verzögerung handelt es sich um beispielhafte Werte, die je nach Brennkraftmaschine, Umweltbedingungen und dergleichen stark variieren können. Dies gilt ohne Beschränkung der Allgemeinheit auch für alle weiteren genannten oder abgebildeten Kurbelwellenwinkelwerte.

Durch diese erfindungsgemäße Verzögerung ergibt sich eine bessere Umsetzung der während einer ersten Verbrennung beim Direktstart der Brennkraftmaschine 1 freigesetzten Brennenergie in mechanische Arbeit, die zum Starten der Brennkraftmaschine 1 nutzbar ist.

Ein ähnlicher Effekt kann gemäß einer weiteren Ausführungsform der Erfindung auch durch eine Verkürzung der Auslassphase erzielt werden. Hierbei wird das Auslassventil 6 (Fig. 10) z.B. gegenüber der Leerlaufbetriebsart 110 (Fig. 9) für einen kürzeren Zeitraum geöffnet. Die für die verkürzte Auslassphase erforderliche Ansteuerung ist der gestrichelten Kurve aus Figur 2 zu entnehmen, in der die zur herkömmlichen Ansteuerung gehörigen Kurven wiederum durchgezogen eingezeichnet sind. Im Gegensatz zur vorherigen Ausführungsform der Erfindung trifft hierbei das Ende der erfindungsgemäß verkürzten Auslassphase zeitlich mit dem Ende der herkömmlichen Auslassphase zusammen. Diese Verfahrensvariante ist auch bei Brennkraftmaschinen anwendbar, die allein eine Variation der Öffnungsdauer der Ein-/Auslassventile 5, 6 erlauben.

Eine weitere Verfahrensvariante, bei der ein Schließzeitpunkt des Einlassventils 5 gegenüber dem beispielsweise in der Leerlaufbetriebsart 110 verwendeten Standardschließzeitpunkt verzögert wird, ist in Figur 3 dargestellt. Die erfindungsgemäße Verzögerung des Schließzeitpunkts ergibt sich durch eine mit in Figur 3 nach rechts deutenden Pfeilen symbolisierte Verschiebung der Ansteuerung des Einlassventils 5, die wiederum gestrichelt eingezeichnet ist.

Durch die erfindungsgemäße Verschiebung des Schließzeitpunkts des Einlassventils 5 ergibt sich eine Verringerung des im Brennraum 4 herrschenden Kompressionsdrucks der Brennkraftmaschine 1, so dass auch hierdurch ein sicherer Direktstart der Brennkraftmaschine 1 begünstigt wird.

Eine weitere erfindungsgemäße Verfahrensvariante, bei der sich eine Verzögerung des Schließzeitpunkts des Einlassventils 5 ergibt, ist in Figur 4 gezeigt und ist durch eine gegenüber z.B. der Leerlaufbetriebsart 110 verlängerte Öffnungsdauer des Einlassventils 5 gekennzeichnet. Diese Verfahrensvariante ist wiederum auch bei Brennkraftmaschinen anwendbar, die allein eine Variation der Öffnungsdauer der Ein-/Auslassventile 5, 6 erlauben, jedoch keine Verstellung einer Phase der Ansteuerung der Ein-/Auslassventile 5, 6.

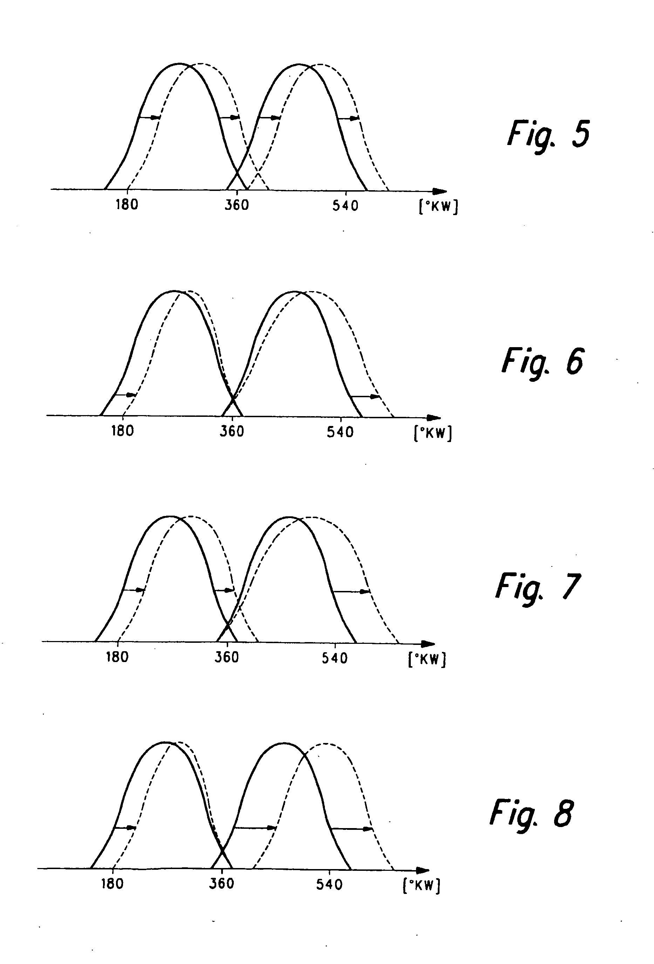

In Figur 5 ist eine weitere vorteilhafte Verfahrensvariante dargestellt, bei der sowohl die Ansteuerung des Auslassventils 6 als auch die Ansteuerung des Einlassventils 5 gegenüber z.B. der Leerlaufbetriebsart 110 zeitlich verzögert ist.

Derselbe Effekt ergibt sich auch bei den Varianten der Erfindung gemäß den Figuren 6 bis 8, die jeweils eine andere Kombination der vorstehend erläuterten Verfahrensvarianten darstellen.

Hierbei zeigt das Ventil-Steuerdiagramm aus Figur 6 eine Kombination der Verfahrensvarianten aus den Figuren 2 und 4, d. h., bei der Ansteuerung gemäß des Ventil-Steuerdiagramms aus Figur 6 wird das Auslassventil 6 (Figur 10) z. B. gegenüber der Leerlaufbetriebsart 110 (Figur 9) für einen kürzeren Zeitraum geöffnet und gleichzeitig wird die Öffnungsdauer des Einlassventils 5 gegenüber z. B. der Leerlaufbetriebsart 110 verlängert.

Die in Figur 7 gezeigte Variante ist dadurch gekennzeichnet, dass die Ansteuerung des Auslassventils 6 um etwa 20° KW bis 30° KW gegenüber der herkömmlichen Ansteuerung verschoben, d. h. verzögert, und dass gleichzeitig die Öffnungsdauer des Einlassventils 5 gegenüber der Leerlaufbetriebsart 110 verlängert ist.

Das Ventil-Steuerdiagramm in Figur 8 zeigt noch eine weitere Ausführungsform der Erfindung, bei der die Auslassphase verkürzt ist, und bei der gleichzeitig der Schließzeitpunkt des Einlassventils gegenüber der Leerlaufbetriebsart 110 dadurch verzögert wird, dass die Ansteuerung des Einlassventils 5 gegenüber der herkömmlichen Ansteuerung verschoben wird.

Auch durch die drei letztgenannten Varianten der Ventilansteuerung gemäß den Figuren 6 bis 8 ergibt sich eine Begünstigung des sicheren Direktstarts der Brennkraftmaschine 1.

Ganz allgemein ist die erfindungsgemäße Verzögerung des Startauslasszeitpunkts und/oder des während der Startbetriebsart 100 verwendeten Schließzeitpunkts bei allen Brennkraftmaschinen mit nockenwellenfreien Ventiltrieben realisierbar.

Darüber hinaus ist die erfindungsgemäße Verzögerung auch bei nockenwellenbasierten Ventiltriebsystemen erreichbar, beispielsweise durch den Einsatz von Phasenstellern, die jeweils eine Einlassnockenwelle bzw, eine Auslassnockenwelle verstellen können.

Eine-andere Ausführungsform der Erfindung erfordert nur einen Phasensteller, der gleichzeitig die Einlassnockenwelle und die Auslassnockenwelle verstellt. Eine sich hierbei ergebende Ventilhubkurve ist beispielsweise in der Figur 5 dargestellt.

Bei einer anderen Ausführungsform der Erfindung, die auf einer Verstellung der Nockenwelle(n) basiert, wird die Einlassnockenwelle und/oder die Auslassnockenwelle bereits bei einer Deaktivierung 199, vgl. Fig. 9, der Brennkraftmaschine 1 für einen nächsten Start der Brennkraftmaschine 1 in der Startbetriebsart 100 verstellt, so dass die zur erfindungsgemäßen Verzögerung des Startauslasszeitpunkts und/oder des während der Startbetriebsart 100 verwendeten Schließzeitpunkts des Einlassventils 5 erforderliche Verstellung der Nockenwelle(n) nicht erst bei dem nächsten Start der Brennkraftmaschine 1 bewirkt werden muss.

Je nach den zur Erzielung der erfindungsgemäßen Verzögerung eingesetzten Mitteln ist eine sich mit wachsender Drehzahl der Brennkraftmaschine 1 vermindernde Verzögerung einstellbar oder eine abrupte Deaktivierung der Verzögerung nach dem Überschreiten einer vorgebbaren Mindestdrehzahl der Brennkraftmaschine 1.

Eine Kombination von gleichen oder verschiedenen Phasenstellern, beispielsweise eine Hintereinanderschaltung eines aus dem Stand der Technik bekannten Flügelzellenphasenstellers mit einem ebenfalls bekannten Kettenversteller, ist auch denkbar zur Verwirklichung des für das jeweilige System erforderlichen Verstellbereiches.

Darüber hinaus ist bei einer weiteren Ausführungsform der Erfindung die Kombination eines oder mehrerer der vorstehend genannten Verfahren mit einer Variation des Ventilhubs des Einlassventils 5 und/oder des Auslassventils 6 vorgesehen, wodurch sich noch eine weitere Verbesserung der Direktstarteigenschaften der Brennkraftmaschine 1 ergibt.

Obwohl das erfindungsgemäße Verfahren sich besonders gut zum Einsatz bei Brennkraftmaschinen mit Direkteinspritzung eignet, ist es auch denkbar, die erfindungsgemäße Ventilansteuerung auch bei Brennkraftmaschinen mit anderen Einspritzsystemen anzuwenden.

## Patentansprüche

1. Verfahren zum Betreiben einer Brennkraftmaschine (1) mit mindestens einem steuerbaren Einlassventil (5) und mindestens einem steuerbaren Auslassventil (6), bei dem die Brennkraftmaschine (1) in einer Startbetriebsart (100) direkt gestartet wird und nach dem Start in mindestens einer weiteren Betriebsart (110) betrieben wird, **dadurch gekennzeichnet, dass** ein während der Startbetriebsart (100) verwendeter Startauslasszeitpunkt des Auslassventils (6) zum Ausstoßen von Abgasen der Brennkraftmaschine (1) innerhalb eines Ausstoßtaktes zeitlich gegenüber einem während der weiteren Betriebsart(en) (110) verwendeten Standardauslasszeitpunkt verzögert wird und/oder dass eine Auslassphase, während der das Auslassventil (6) geöffnet ist, gegenüber einer während der weiteren Betriebsart(en) (110) verwendeten Auslassphase verkürzt wird.

2. Verfahren nach Anspruch 1, **dadurch gekennzeichnet, dass** ein während der Startbetriebsart (100) verwendeter Schließzeitpunkt des Einlassventils (5) zum Ansaugen von Frischgas zeitlich gegenüber einem während der weiteren Betriebsart(en) (110) verwendeten Standardschließzeitpunkt verzögert wird.

3. Verfahren nach Anspruch 1 oder 2, **dadurch gekennzeichnet, dass** die Verzögerung durch Verstellen einer das Auslassventil (6) steuernden Auslassnockenwelle und/oder einer das Einlassventil (5) steuernden Einlassnockenwelle erfolgt.

4. Verfahren nach Anspruch 3, **dadurch gekennzeichnet, dass** je ein Phasensteller zur Verstellung der Einlassnockenwelle bzw. der Auslassnockenwelle verwendet wird.

5. Verfahren nach Anspruch 3, **dadurch gekennzeichnet, dass** ein Phasensteller zur gleichzeitigen Verstellung der Einlassnockenwelle und der Auslassnockenwelle verwendet wird.

6. Verfahren nach einem der Ansprüche 3 bis 5, **dadurch gekennzeichnet, dass** ein die Öffnungszeit des Einlassventils (5) / Auslassventils (6) beeinflussendes Ventiltriebsystem zur Verstellung der Einlassnockenwelle und/oder der Auslassnockenwelle verwendet wird.

7. Verfahren nach einem der Ansprüche 3 bis 6, **dadurch gekennzeichnet, dass** die Einlassnockenwelle und/oder die Auslassnockenwelle bereits bei einer Deaktivierung (199) der Brennkraftmaschine (1) für einen nächsten Start in der Startbetriebsart (100) verstellt werden.

8. Verfahren nach Anspruch 1, **dadurch gekennzeichnet, dass** das Einlassventil (5) und/oder das Auslassventil (6) durch ein nockenwellenfreies Ventiltriebsystem gesteuert werden.

9. Verfahren nach einem der vorstehenden Ansprüche, **dadurch gekennzeichnet, dass** ein Ventilhub des Einlassventils (5) oder des Auslassventils (6) variiert wird.

10. Verfahren nach einem der vorstehenden Ansprüche, **dadurch gekennzeichnet, dass** die Verzögerung mit steigender Drehzahl der Brennkraftmaschine (1) schrittweise verringert wird.

11. Verfahren nach einem der vorstehenden Ansprüche, **dadurch gekennzeichnet, dass** die Verzögerung bei Überschreiten einer vorgebbaren Mindestdrehzahl der Brennkraftmaschine (1) deaktiviert wird.

12. Brennkraftmaschine (1) mit mindestens einem steuerbaren Einlassventil (5) und mindestens einem steuerbaren Auslassventil (6), die in einer Startbetriebsart (100) direkt gestartet wird und nach dem Start in mindestens einer weiteren Betriebsart (110) betrieben wird, **dadurch gekennzeichnet, dass** die Brennkraftmaschine (1) dazu ausgebildet ist, einen während der Startbetriebsart (100) verwendeten Startauslasszeitpunkt des Auslassventils (6) zum Ausstoßen von Abgasen der Brennkraftmaschine (1) innerhalb eines Ausstoßtaktes zeitlich gegenüber einem während der weiteren Betriebsart(en) (110) verwendeten Standardauslasszeitpunkt zu verzögern und/oder eine Auslassphase, während der das Auslassventil (6) geöffnet ist, gegenüber einer während der weiteren Betriebsart(en) (110) verwendeten Auslassphase, zu verkürzen.

13. Steuergerät (15) für eine Brennkraftmaschine (1) mit mindestens einem steuerbaren Einlassventil (5) und mindestens einem steuerbaren Auslassventil (6), die in einer Startbetriebsart (100) direkt gestartet wird und nach dem Start in mindestens einer weiteren Betriebsart (110) betrieben wird, **dadurch gekennzeichnet, dass** das Steuergerät (15) dazu ausgebildet ist, einen während der Startbetriebsart (100) verwendeten Startauslasszeitpunkt des Auslassventils (6) zum Ausstoßen von Abgasen der Brennkraftmaschine (1) innerhalb eines Ausstoßtaktes zeitlich gegenüber einem während der weiteren Betriebsart(en) (110) verwendeten Standardauslasszeitpunkt zu verzögern und/oder eine Auslassphase, während der das Auslassventil (6) geöffnet ist, gegenüber einer während der weiteren Betriebsart(en) (110) verwendeten Auslassphase, zu verkürzen.

14. Computerprogramm für ein Steuergerät (15) einer Brennkraftmaschine (1) mit mindestens einem steuerbaren Einlassventil (5) und mindestens einem steuerbaren Auslassventil (6), die in einer Startbetriebsart (100) direkt gestartet wird und nach dem Start in mindestens einer weiteren Betriebsart (110) betrieben wird, **dadurch gekennzeichnet, dass** das Computerprogramm dazu ausgebildet ist, einen während der Startbetriebsart (100) verwendeten Startauslasszeitpunkt des Auslassventils (6) zum Ausstoßen von Abgasen der Brennkraftmaschine (1) innerhalb eines Ausstoßtaktes zeitlich gegenüber einem während der weiteren Betriebsart(en) (110) verwendeten Standardauslasszeitpunkt zu verzögern und/oder eine Auslassphase, während der das Auslassventil (6) geöffnet ist, gegenüber einer während der weiteren Betriebsart(en) (110) verwendeten Auslassphase, zu verkürzen.

15. Computerprogramm nach Anspruch 14, **dadurch gekennzeichnet, dass** das Computerprogramm auf einem elektrischen Speichermedium, insbesondere auf einem Flash-Memory oder einem Read-Only-Memory abgespeichert ist.

## Claims

1. Method for operating an internal combustion engine (1) having at least one controllable inlet valve (5) and at least one controllable outlet valve (6), in which method the internal combustion engine (1) is directly started in a starting operating mode (100) and, after the start, is operated in at least one further operating mode (110), **characterized in that** a starting outlet time, used during the starting operating mode (100), of the outlet valve (6) for discharging exhaust gases of the internal combustion engine (1) within an exhaust stroke is delayed in terms of time with respect to a standard outlet time used during the further operating mode(s) (110), and/or **in that** an outlet phase during which the outlet valve (6) is open is shortened with respect to an outlet phase used during the further operating mode(s) (110).

2. Method according to Claim 1, **characterized in that** a closing time, used during the starting operating mode (100), of the inlet valve (5) for the intake of fresh gas is delayed in terms of time with respect to a standard closing time used during the further operating mode(s) (110).

3. Method according to Claim 1 or 2, **characterized in that** the delay takes place by adjusting an outlet camshaft which controls the outlet valve (6) and/or an inlet camshaft which controls the inlet valve (5).

4. Method according to Claim 3, **characterized in that** in each case one phase adjuster is used for adjusting the inlet camshaft and the outlet camshaft.

5. Method according to Claim 3, **characterized in that** one phase adjuster is used for the simultaneous adjustment of the inlet camshaft and of the outlet camshaft.

6. Method according to one of Claims 3 to 5,
**characterized in that** a valve drive system which influences the opening time of the inlet valve (5) / outlet valve (6) is used for adjusting the inlet camshaft and/or the outlet camshaft.

7. Method according to one of Claims -3 to 6, **characterized in that** the inlet camshaft and/or the outlet camshaft are adjusted for a subsequent start in the starting operating mode (100) already during a deactivation (199) of the internal combustion engine (1) .

8. Method according to Claim 1, **characterized in that** the inlet valve (5) and/or the outlet valve (6) are controlled by means of a valve drive system which has no camshaft.

9. Method according to one of the preceding claims, **characterized in that** a valve lift of the inlet valve (5) or of the outlet valve (6) is varied.

10. Method according to one of the preceding claims, **characterized in that** the delay is reduced in a stepped fashion with increasing speed of the internal combustion engine (1).

11. Method according to one of the preceding claims, **characterized in that** the delay is deactivated in the event of a predefinable minimum speed of the internal combustion engine (1) being exceeded.

12. Internal combustion engine (1) having at least one controllable inlet valve (5) and at least one controllable outlet valve (6), which internal combustion engine (1) is directly started in a starting operating mode (100) and, after the start, is operated in at least one further operating mode (110), **characterized in that** the internal combustion engine (1) is designed to delay a starting outlet time, used during the starting operating mode (100), of the outlet valve (6) for discharging exhaust gases of the internal combustion engine (1) within an exhaust stroke in terms of time with respect to a standard outlet time used during the further operating mode(s) (110), and/or to shorten an outlet phase during which the outlet valve (6) is open with respect to an outlet phase used during the further operating mode(s) (110).

13. Control unit (15) for an internal combustion engine (1) having at least one controllable inlet valve (5) and at least one controllable outlet valve (6), which internal combustion engine (1) is directly started in a starting operating mode (100) and, after the start, is operated in at least one further operating mode (110), **characterized in that** the control unit (15) is designed to delay a starting outlet time, used during the starting operating mode (100), of the outlet valve (6) for discharging exhaust gases of the internal combustion engine (1) within an exhaust stroke in terms of time with respect to a standard outlet time used during the further operating mode(s) (110), and/or to shorten an outlet phase during which the outlet valve (6) is open with respect to an outlet phase used during the further operating mode(s) (110).

14. Computer program for a control unit (15) of an internal combustion engine (1) having at least one controllable inlet valve (5) and at least one controllable outlet valve (6), which internal combustion engine (1) is directly started in a starting operating mode (100) and, after the start, is operated in at least one further operating mode (110), **characterized in that** the computer program is designed to delay a starting outlet time, used during the starting operating mode (100), of the outlet valve (6) for discharging exhaust gases of the internal combustion engine (1) within an exhaust stroke in terms of time with respect to a standard outlet time used during the further operating mode(s) (110), and/or to shorten an outlet phase during which the outlet valve (6) is open with respect to an outlet phase used during the further operating mode(s) (110).

15. Computer program according to Claim 14, **characterized in that** the computer program is stored on an electric storage medium, in particular on a flash memory or on a read-only memory.

## Revendications

1. Procédé de gestion d'un moteur à combustion interne (1) comportant au moins une soupape d'admission (5), commandée et au moins une soupape d'échappement (6), commandée, procédé selon lequel le moteur à combustion interne (1) est démarré directement dans un mode de démarrage (10) et après le démarrage il fonctionne selon au moins un autre mode de fonctionnement (110),
**caractérisé en ce que**
pendant le mode de fonctionnement de démarrage (100), l'instant de début d'échappement de la soupape d'échappement (6) pour expulser les gaz d'échappement du moteur à combustion interne (1) dans le collecteur d'échappement est retardé par rapport à l'instant d'échappement standard utilisé dans les autres modes de fonctionnement (110) et/ou on raccourcit la phase d'échappement au cours de laquelle la soupape d'échappement (6) est ouverte par rapport à la phase d'échappement utilisée pendant le ou les autres modes de fonctionnement (110).

2. Procédé selon la revendication 1,
**caractérisé en ce que**
l'instant de fermeture de la soupape d'admission (5) utilisé au cours du mode de démarrage (100), pour aspirer des gaz frais, est retardé par rapport à l'instant de fermeture standard utilisé dans le ou les autres modes de fonctionnement (110).

3. Procédé selon les revendications 1 ou 2,
**caractérisé en ce que**
le retard se fait par réglage d'un arbre à cames d'échappement commandant la soupape d'échappement (6) et/ou d'un arbre à cames d'admission commandant la soupape d'admission (5).

4. Procédé selon la revendication 3,
**caractérisé en ce qu'**
on utilise un moyen de réglage de phase pour régler l'arbre à cames d'admission ou l'arbre à cames d'échappement.

5. Procédé selon la revendication 3,
**caractérisé en ce qu'**
on utilise un moyen de réglage de phase pour régler en même temps l'arbre à cames d'admission et l'arbre à cames d'échappement.

6. Procédé selon l'une des revendications 3 à 5,
**caractérisé en ce qu'**
on utilise un système d'entraînement de soupapes pour influencer la durée d'ouverture de la soupape d'admission (5) / soupape d'échappement (6) et régler l'arbre à cames d'admission et/ou l'arbre à cames d'échappement.

7. Procédé selon l'une des revendications 3 à 6,
**caractérisé en ce que**
l'arbre à cames d'admission et/ou l'arbre à cames d'échappement sont réglés lors de la neutralisation (199) du moteur à combustion interne (1) en vue du démarrage suivant en mode de démarrage (100).

8. Procédé selon la revendication 1,
**caractérisé en ce que**
la soupape d'admission (5) et/ou la soupape d'échappement (6) sont commandées par un système d'entraînement de soupape sans arbre à cames.

9. Procédé selon l'une des revendications précédentes,
**caractérisé en ce qu'**
on modifie la course de la soupape d'admission (5) ou de la soupape d'échappement (6).

10. Procédé selon l'une des revendications précédentes,
**caractérisé en ce qu'**
on diminue pas à pas le retard avec l'augmentation de la vitesse de rotation du moteur à combustion interne (1).

11. Procédé selon l'une des revendications précédentes,
**caractérisé en ce qu'**
on neutralise le retard lorsqu'on dépasse une vitesse de rotation minimale prédéfinie pour le moteur à combustion interne (1).

12. Moteur à combustion interne (1) comportant au moins une soupape d'admission (5), commandée et au moins une soupape d'échappement (6) commandée, le moteur étant démarré directement dans un mode de démarrage (100) et après le démarrage il fonctionne dans au moins un autre mode de fonctionnement (110),
**caractérisé en ce que**
le moteur à combustion interne est réalisé pour retarder l'instant d'échappement de démarrage utilisé pour le mode de démarrage (100) de la soupape d'échappement (6) pour expulser les gaz d'échappement du moteur à combustion interne (1) dans le collecteur d'échappement, en retardant par rapport à l'instant d'échappement standard utilisé pour le ou les autres modes de fonctionnement (110) et/ou raccourcir une phase d'échappement au cours de laquelle la soupape d'échappement (6) est ouverte, par rapport à la phase d'échappement utilisée au cours des autres modes de fonctionnement (110).

13. Appareil de commande (15) d'un moteur à combustion interne (1) comportant au moins une soupape d'admission (5) commandée et au moins une soupape d'échappement (6) commandée, ce moteur étant démarré directement dans le mode de démarrage (100) et après le démarrage il fonctionne selon au moins un autre mode de fonctionnement (110),
**caractérisé en ce que**
l'appareil de commande (15) est réalisé pour que l'instant d'échappement de départ utilisé pendant le mode de fonctionnement de départ pour la soupape d'échappement (6) servant à expulser les gaz d'échappement du moteur à combustion interne (1) est retardé au cours du temps d'expulsion, par rapport à un instant d'expulsion standard utilisé dans le ou les autres modes de fonctionnement (110) et/ou une phase d'échappement au cours de laquelle la soupape d'échappement (6) est ouverte ; sera raccourcie par rapport à la phase d'échappement utilisée au cours du ou des autres modes de fonctionnement (110).

14. Programme d'ordinateur pour un appareil de commande (15) d'un moteur à combustion interne (1) ayant au moins une soupape d'admission (5) commandée et au moins une soupape d'échappement (6), commandée, ces soupapes étant démarrées directement en mode de démarrage et après le démarrage, on fonctionne selon au moins un autre mode de fonctionnement (110),
**caractérisé en ce que**
le programme d'ordinateur est réalisé pour retarder l'instant d'échappement de démarrage utilisé au cours du mode de démarrage (100) pour la soupape d'échappement (6) servant à expulser les gaz d'échappement du moteur à combustion interne (1) dans un collecteur d'échappement, par rapport à un autre mode de fonctionnement (110) utilisant l'instant d'échappement standard et/ ou la phase d'échappement, au cours de laquelle la soupape d'échappement (6) est ouverte, sera raccourcie par rapport à la phase d'échappement utilisée au cours du ou des autres modes de fonctionnement (110).

15. Programme d'ordinateur selon la revendication 14,
**caractérisé en ce que**
le programme est enregistré sur un support de mémoire électrique, notamment sur une mémoire flash ou une mémoire morte ROM.
